# EUROPÄISCHE PATENTANMELDUNG

(11) **EP 4 550 651 A1**
(43) Veröffentlichungstag der Anmeldung: **07.05.2025**
(21) Anmeldenummer: 23206903.9
(22) Anmeldetag: 31.10.2023
(51) Int. Cl.: H02M 7/145, H02M 7/162, H02M 7/219, H02M 5/10, H02M 1/00, C25B 1/00, H01F 29/02

(54) **ENERGIEVERSORGUNGSVORRICHTUNG FÜR EINEN ELEKTROLYSEUR**

(71) Anmelder: Innomotics GmbH, 90441 Nürnberg (DE)
(72) Erfinder: Die Erfindernennung liegt noch nicht vor
(74) Vertreter: Siemens Patent Attorneys

(57) **Zusammenfassung**

Die Erfindung betrifft ein Energieversorgungsvorrichtung (1) für einen Elektrolyseur (2), wobei eine erste Wicklung (111) eines ersten Transformators (11) zur Verbindung mit einem Energieversorgungsnetz (20) vorgesehen ist, wobei eines netzgeführten Stromrichter (13) wechselspannungsseitig mit einer zweiten Wicklung (112) des ersten Transformators (11) verbunden ist, wobei der gleichspannungsseitige Anschluss (131) des netzgeführten Stromrichters (13) als Anschluss für den Elektrolyseur (2) ausgebildet ist. Zur Verbesserung der Energieversorgungsvorrichtung (1) wird vorgeschlagen, dass ein selbstgeführter Stromrichter (14) wechselspannungsseitig mit einer zweiten Wicklung (122) eines zweiten Transformators (12) verbunden ist, wobei der selbstgeführte Stromrichter (14) gleichspannungsseitig mit einer Energiequelle verbunden ist, wobei eine erste Wicklung (121) des zweiten Transformators (12) mit einer der Wicklungen (111,112) des ersten Transformators (11) elektrisch in Reihe angeordnet ist. Die Erfindung betrifft ferner eine Elektrolysevorrichtung (10) mit einer derartigen Energieversorgungsvorrichtung (1) und mindestens einem Elektrolyseur (2). Weiter betrifft die Erfindung ein Verfahren zum Betreiben einer derartigen Energieversorgungsvorrichtung (1) oder einer derartigen Elektrolysevorrichtung (10).

## Beschreibung

Die Erfindung betrifft eine Energieversorgungsvorrichtung für einen Elektrolyseur mit einem ersten Transformator und einem netzgeführten Stromrichter, wobei eine erste Wicklung des ersten Transformators zur Verbindung mit einem Energieversorgungsnetz vorgesehen ist, wobei der netzgeführten Stromrichter wechselspannungsseitig mit einer zweiten Wicklung des ersten Transformators verbunden ist, wobei der gleichspannungsseitige Anschluss des netzgeführten Stromrichters als Anschluss für den Elektrolyseur ausgebildet ist. Ferner betrifft die Erfindung eine Elektrolysevorrichtung mit einer derartigen Energieversorgungsvorrichtung und mindestens einem Elektrolyseur. Die Erfindung betrifft weiter ein Verfahren zum Betreiben einer derartigen Energieversorgungsvorrichtung oder einer derartigen Elektrolysevorrichtung.

Elektrolyse-Gleichrichter für die Versorgung eines Elektrolyseurs mit elektrischer Energie müssen in der Lage sein, Schwankungen der Netzspannung eines Energieversorgungsnetzes auszuregeln und bei einer Alterung des Elektrolyseurs eine höhere Gleichspannung zur Verfügung zu stellen. Dazu werden derzeit bei Anlagen mit einer Leistung von mehr als 5 MW verschiedene Schaltungstopologien genutzt.

Eine erste Schaltungstopologie stellt der gesteuerte Gleichrichter mit Thyristoren dar, der in einer sechs-, zwölf- oder höherpulsigen Ausführung (B6C, B12C, B18C, B24C) ausgebildet ist. Dieser stellt eine kostengünstige Lösung für hohe Leistungen dar. Dabei wird die Gleichspannung, die Ausgangsspannung des Thyristorgleichrichters, über den Steuerwinkel α eingestellt oder es wird ein Stufenschalter mit einer elektromechanischen oder elektronischen Umschaltung genutzt.

Ein alternativer Aufbau verwendet einen ungesteuerten Gleichrichter mit einem Tiefsetzsteller. Der Tiefsetzsteller wird dabei auf den vollen Strom ausgelegt benötigt für seinen Betrieb Drosseln. Dabei werden oftmals mehrere Tiefsetzsteller eingesetzt, um Oberschwingungsanforderungen erfüllen zu können.

Eine weitere alternative Schaltungstopologie besteht in der Verwendung eines netzseitigen Spannungszwischenkreis-Umrichters wie er auch in Anwendungen Photovoltaik und der Windenergieanlagen zum Einsatz kommt. Für den Einsatz dieser Umrichter wird die Sekundärspannung des Transformators entsprechend niedrig gewählt, um die erforderliche Gleichspannung herstellen zu können. Diese findet jedoch derzeit bei der Elektrolyse keine oder nur selten Anwendung.

Im Folgenden ist der Begriff der Wicklung eines Transformators genannt. Dabei umfasst dieser Begriff der Wicklung sowohl eine einphasige Wicklung, die eine einzige Teilwicklung für die eine vorliegende Phase aufweist als auch eine mehrphasige, insbesondere eine dreiphasige, Wicklung, bei der die Wicklung entsprechend viele Teilwicklungen aufweist. Für jede Phase ist dabei eine Teilwicklung vorgesehen, so dass beispielsweise eine dreiphasige Wicklung drei Teilwicklungen aufweist. Diese Teilwicklungen können beispielsweise als Sternwicklung oder Dreieckswicklung ausgeführt sein.

Die Bezeichnung in Reihe oder elektrisch in Reihe angeordnet drückt aus, dass sich die Spannung der in Reihe angeordneten Komponenten addieren. Diese müssen dazu nicht notwendigerweise vom gleichen Strom durchflossen werden.

Der Erfindung liegt die Aufgabe zugrunde, die Energieversorgung für einen Elektrolyseur zu verbessern.

Diese Aufgabe wird durch eine Energieversorgungsvorrichtung für einen Elektrolyseur gelöst, wobei die Energieversorgungsvorrichtung einen ersten Transformator und einen zweiten Transformator, einem netzgeführten Stromrichter und selbstgeführten Stromrichter aufweist, wobei eine erste Wicklung des ersten Transformators zur Verbindung mit einem Energieversorgungsnetz vorgesehen ist, wobei der netzgeführten Stromrichter wechselspannungsseitig mit einer zweiten Wicklung des ersten Transformators verbunden ist, wobei der gleichspannungsseitige Anschluss des netzgeführten Stromrichters als Anschluss für den Elektrolyseur ausgebildet ist, wobei der selbstgeführten Stromrichter wechselspannungsseitig mit einer zweiten Wicklung des zweiten Transformators verbunden ist, wobei der selbstgeführte Stromrichter gleichspannungsseitig mit einer Energiequelle verbunden ist, wobei eine erste Wicklung des zweiten Transformators mit einer der Wicklungen des ersten Transformators elektrisch in Reihe angeordnet ist. Weiter wird diese Aufgabe durch eine Elektrolysevorrichtung mit einer derartigen Energieversorgungsvorrichtung gelöst, wobei die Energieversorgungsvorrichtung mindestens einem Elektrolyseur aufweist, wobei der Elektrolyseur mit dem gleichspannungsseitigen Anschluss des netzgeführten Stromrichters elektrisch verbunden ist. Diese Aufgabe wird ferner durch ein Verfahren zum Betreiben einer derartigen Energieversorgungsvorrichtung oder einer derartigen Elektrolysevorrichtung gelöst, wobei die Spannung am gleichspannungsseitigen Anschluss des netzgeführten Stromrichters mittels der wechselspannungsseitigen Spannung des selbstgeführten Stromrichters gesteuert oder geregelt wird.

Weitere vorteilhafte Ausgestaltungen der Erfindung sind in den abhängigen Ansprüchen angegeben.

Der Erfindung liegt unter anderem die Erkenntnis zugrunde, dass eine Schwankung in der Netzspannung durch einen selbstgeführten Stromrichter ausgeglichen werden kann. Dabei wird der lediglich eingeschränkt erforderliche Stellbereich der Gleichspannung ausgenutzt. Typisch sind +/-10% für Schwankungen der Netzspannung des Energieversorgungsnetzes.

Die Spannung des selbstgeführten Stromrichters wird zur Kompensation der Netzspannungsschwankung mittels des zweiten Transformators zu der Netzspannung hinzugefügt oder von dieser abgezogen, so dass sich für die Versorgung des netzgeführten Stromrichters die gewünschte Spannung ergibt. Der netzgeführte Stromrichter braucht dann nach Abschluss der Vorladung keine Regelung der durch ihn erzeugten Gleichspannung mehr vorzunehmen. Ist der netzgeführte Stromrichter als Thyristorgleichrichter ausgebildet, kann er mit einem Steuerwinkel von null betrieben werden.

Dabei kann der netzgeführte Stromrichter beispielsweise als sechspulsiger, zwölfpulsiger oder höherpulsiger Stromrichter ausgebildet sein.

Der Ausgleich der schwankenden Netzspannung erfolgt dabei über den selbstgeführten Stromrichter. Wenn der Spannungszwischenkreis Umrichter für eine Leistung von beispielsweise 15% der Leistung des netzgeführten Stromrichters ausgelegt ist, kann eine Spannungsschwankung der Netzspannung des Energieversorgungsnetzes von +/-10% und noch zusätzlich ein alterungsbedingter Mehrspannungsbedarf von 10% ausgeregelt werden.

Da der selbstgeführte Stromrichter Wirkleistung überträgt, muss er gleichspannungsseitig mit einer Energiequelle oder einem Energiespeicher verbunden sein, die je nach Netzspannungsbedingungen elektrische Energie aufnehmen und/oder abgeben kann. Im Folgenden umfasst der Begriff der Energiequelle auch einen Energiespeicher, der elektrische Energie aufnehmen und abgeben kann. In einer einfachen Ausgestaltung kann über den gleichspannungsseitigen Anschluss des netzgeführten Stromrichters dieser netzgeführte Stromrichter als ein derartiger Energiequellespeicher genutzt werden.

Bei einer vorteilhaften Ausgestaltung der Erfindung ist die erste Wicklung des zweiten Transformators elektrisch in Reihe zu der ersten Wicklung des ersten Transformators angeordnet. In dieser Ausgestaltung wird elektrisch in Reihe zur ersten Wicklung, auch als Primärwicklung bezeichnet, des ersten Transformators die erste Wicklung des zweiten Transformators angeordnet. Durch den selbstgeführten Stromrichter wird dann eine Spannung erzeugt, die unter Berücksichtigung des Übersetzungsverhältnisses des zweiten Transformators je nach Phasenlage von der Netzspannung des Energieversorgungsnetzes abgezogen oder hinzuaddiert wird. Da die zweite Wicklung des ersten Transformators nicht Teil einer Reihenschaltung ist, kann diese bei einer mehrphasigen Ausgestaltung der Wicklung als Stern oder Dreieckwicklung ausgebildet sein. Damit kann auf einfache Weise eine zwölfpulsige Schaltung für den netzgeführten Stromrichter realisiert werden.

Bei einer weiteren vorteilhaften Ausgestaltung der Erfindung ist die erste Wicklung des zweiten Transformators elektrisch in Reihe zu der zweiten Wicklung des ersten Transformators angeordnet. Diese Anordnung hat den Vorteil, dass nur der erste Transformator hinsichtlich seiner Isolierung auf das Spannungsniveau der Spannung des Energieversorgungsnetzes ausgeführt sein muss. Dies macht den zweiten Transformator einfacher im Aufbau und kostengünstiger in der Herstellung.

Bei einer weiteren vorteilhaften Ausgestaltung der Erfindung ist der selbstgeführte Stromrichter gleichspannungsseitig mit dem gleichspannungsseitigen Anschluss des netzgeführten Stromrichters verbunden. Damit dient zum einen der netzgeführte Stromrichter dem selbstgeführten Stromrichter als Energiequelle für die Aufnahme von elektrischer Energie. Überträgt der selbstgeführte Stromrichter elektrische Energie auf die Gleichspannungsseite, kann diese Energie der Last, dem Elektrolyseur, zur Verfügung gestellt werden und verringert den Energiebedarf, der vom netzgeführten Stromrichter an die Last zu übertragen ist. Hierbei können die vorhandenen Komponenten der Elektrolysevorrichtung für die Aufgaben der Übertragung von elektrischer Energie innerhalb des Systems vorteilhaft genutzt werden.

Bei einer weiteren vorteilhaften Ausgestaltung der Erfindung ist der selbstgeführte Stromrichter gleichspannungsseitig mit einem gleichspannungsseitigen Anschluss eines weiteren Stromrichters verbunden, wobei der weitere Stromrichter wechselspannungsseitig mit einer dritten Wicklung des ersten Transformators verbunden ist. Mit dem weiteren selbstgeführten Stromrichter wird dem selbstgeführten Stromrichter eine Energiequelle zur Verfügung gestellt, um die für seinen Betrieb erforderliche Wirkleistung austauschen zu können. Dieser weitere Stromrichter, beispielsweise ausgestaltet als selbstgeführter Stromrichter, ermöglicht es, den netzgeführten Stromrichter in seiner Leistung geringer zu dimensionieren, da er den genannten Wirkleistungsbedarf nicht mehr dem selbstgeführten Stromrichter über den Gleichspannungsanschluss bereitstellen muss. Vielmehr kann dieser Anteil an Leistung der Last zur Verfügung gestellt werden. Dies erhöht die Leistungsfähigkeit der Elektrolysevorrichtung.

Bei einer weiteren vorteilhaften Ausgestaltung der Erfindung weist die zweite Wicklung des ersten Transformators mindestens zwei Anzapfungen auf. Zur Kompensation einer Alterung wird die erste oder zweite Wicklung des ersten Transformators mit mehreren Anzapfungen, d.h. mindestens zwei Anzapfungen, ausgeführt. Ein Umklemmen wird erst mit fortschreitender Alterung in der Größenordnung nach einigen Jahren erforderlich. Daher kann das Umklemmen händisch, auch als manuelles Umklemmen bezeichnet, vorgenommen werden. Dies reduziert die Kosten gegenüber einer elektromechanischen Schalterlösung. Insbesondere können die Anzapfungen niederspannungsseitig, d.h. an der zweiten Wicklung, angeordnet werden. Für mechanische Schalter wäre eine derartige Anordnung wegen der im Vergleich zur ersten Wicklung höheren Ströme, die zu schalten sind, ungünstig. Durch das manuelle Umklemmen entfällt dieser Nachteil. Zusätzlich wird durch die Anordnung der Anzapfungen in der zweiten Wicklung die Transformatorauslegung deutlich günstiger.

Bei einer weiteren vorteilhaften Ausgestaltung der Erfindung wird die wechselspannungsseitige Spannung des selbstgeführten Stromrichters derart gesteuert oder geregelt wird, dass die Spannungen der elektrisch in Reihe angeordneten Wicklungen phasengleich oder um 180° phasenverschoben sind. Damit wirkt die Energieversorgungsvorrichtung gegenüber dem Energieversorgungsnetz wie ein netzgeführter Stromrichter. Ist die Netzspannung größer als die für die Regelung der Gleichspannung benötigten Eingangsspannung des netzgeführten Stromrichters, so wird durch den selbstgeführten Stromrichter eine bezogen auf die andere Wicklung der elektrisch in Reihe angeordneten Wicklungen phasengleiche Spannung an der entsprechenden Wicklung der elektrisch in Reihe angeordneten Wicklungen erzeugt. Dies bewirkt, dass die Eingangsspannung für den netzgeführten Stromrichter kleiner ist als die Netzspannung. Ist die Netzspannung kleiner als die für die Regelung der Gleichspannung benötigten Eingangsspannung des netzgeführten Stromrichters, so wird durch den selbstgeführten Stromrichter eine bezogen auf die andere Wicklung der elektrisch in Reihe angeordneten Wicklungen um 180° phasenverschobene Spannung an der entsprechenden Wicklung der elektrisch in Reihe angeordneten Wicklungen erzeugt. Dies bewirkt, dass die Eingangsspannung für den netzgeführten Stromrichter größer ist als die Netzspannung. Von phasengleich und 180° phasenverschoben kann auch ausgegangen werden, wenn vom Idealwert (0° bzw. 180°) um +/- 5° abgewichen wird. Damit kann die Gleichspannung an dem gleichspannungsseitigen Anschluss des netzgeführten Stromrichters durch den selbstgeführten Stromrichter geregelt werden, wobei gleichzeitig der netzgeführte Stromrichter sich wie ein Thyristorgleichrichter mit einem Steuerwinkel von null verhält. Damit wird der netzgeführte Stromrichter in seiner Wirkleistungsübertragung optimal ausgenutzt. Mit anderen Worten ergibt sich in einer vorteilhaften Ausgestaltung eine besonders hohe Ausnutzung des netzgeführten Stromrichters, insbesondere wenn der netzgeführte Stromrichter als Thyristorgleichrichter ausgebildet ist und mit einem Steuerwinkel von null betrieben wird.

Im Folgenden wird die Erfindung anhand der in den Figuren dargestellten Ausführungsbeispiele näher beschrieben und erläutert. Es zeigen:
- FIG 1 bis FIG 3: Ausführungsbeispiele einer Energieversorgungsvorrichtung,
- FIG 4: ein Ausführungsbeispiel einer Elektrolysevorrichtung,
- FIG 5: ein Zeigerbild für unterschiedliche Spannungskonfigurationen und
- FIG 6: eine Tabelle mit der Auswirkung bei der Nutzung unterschiedlicher Anzapfungen des ersten Transformators auf die Spannung am gleichspannungsseitigen Anschluss des netzgeführten Stromrichters.

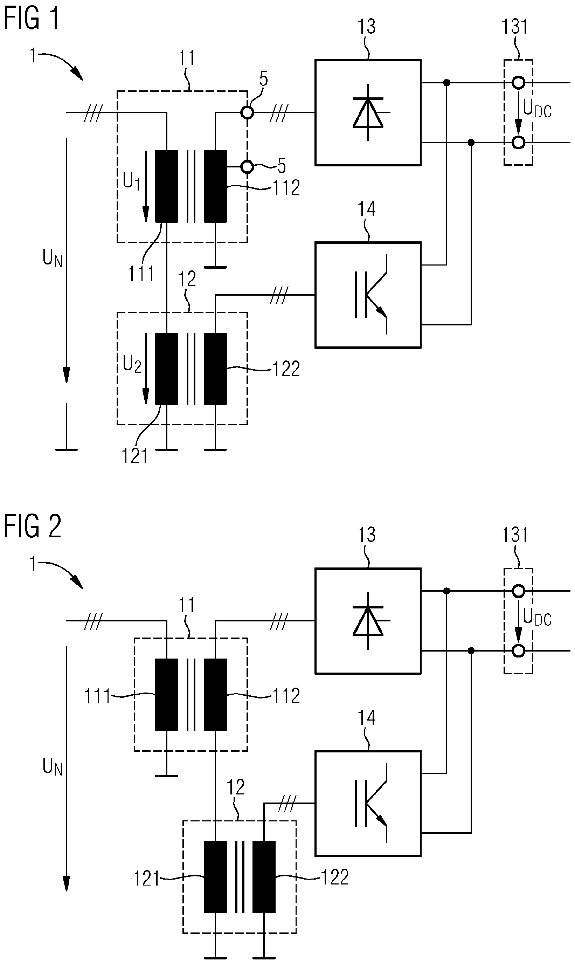

Die FIG 1 zeigt ein Ausführungsbeispiel einer Energieversorgungsvorrichtung 1. Diese weist einen ersten Transformator 11 mit einer ersten Wicklung 111 und einer zweiten Wicklung 112 auf. Darüber hinaus weist die zweite Wicklung 112 zwei Anzapfungen 5 auf, mit denen das Übersetzungsverhältnis des ersten Transformators 11 geändert werden kann. Die zweite Wicklung 112 ist über eine der Anzapfungen 5 mit einem netzgeführten Stromrichter 13 verbunden. Dieser netzgeführte Stromrichter 13 wandelt eine über den ersten Transformator 11 übertragenen elektrische Energie in eine Gleichspannung um, die einem hier nicht dargestellten Elektrolyseur 2, an einem gleichspannungsseitigen Anschluss 131 zur Verfügung gestellt werden kann. Der netzgeführte Stromrichter 13, kann, wie symbolisch angedeutet, beispielsweise als Thyristorgleichrichter ausgebildet sein.

Die Anzapfungen 5 können alternativ oder ergänzend auch an der ersten Wicklung 111 angeordnet sein.

Darüber hinaus weist die Energieversorgungsvorrichtung 1 einen zweiten Transformator 12 mit einer ersten Wicklung 121 und einer zweite Wicklung 122 auf. Die zweite Wicklung 122 des zweiten Transformators 12 ist mit einem selbstgeführten Stromrichter 14 verbunden. Dieser selbstgeführte Stromrichter 14 kann beispielsweise, wie symbolisch angedeutet, IGBTs als Halbleiter verwenden. Da diese Halbleiter abschaltbar sind, lassen sich mit diesen ein selbstgeführter Stromrichter 14 aufbauen. Aufgabe des selbstgeführten Stromrichters 14 ist es unter anderem, Schwankungen in der Netzspannung zu kompensieren. Dazu erzeugt der selbstgeführte Stromrichter 14 eine Spannung, die über den zweiten Transformator 12 eingekoppelt wird. Dazu ist die erste Wicklung 121 des zweiten Transformators 12 elektrisch in Reihe zu der ersten Wicklung 111 des ersten Transformators 11 angeordnet. Damit addieren sich die Spannung U₁, die an der ersten Wicklung 111 des ersten Transformators 11 anliegt, und die Spannung U₂, die an der ersten Wicklung 121 des zweiten Transformator 12 anliegt. Die Summe dieser Spannungen U₁ und U₂ entspricht der Netzspannung U_{N}. Durch die Erzeugung einer entsprechenden Spannung U₂ an der ersten Wicklung 121 des zweiten Transformators 12 kann eine Spannung U1 an der ersten Wicklung 111 des ersten Transformators 11 eingestellt werden.

Zur Erzeugung der Spannung U₂ durch den selbstgeführten Stromrichter 14 wird elektrische Energie benötigt. Diese muss dem selbstgeführten Stromrichter 14 durch eine Energiequelle oder einen Energiespeicher zur Verfügung gestellt werden. Dazu ist der selbstgeführte Stromrichter 14 in diesem Ausführungsbeispiel gleichspannungsseitig mit dem gleichspannungsseitigen Anschluss 131 des netzgeführten Stromrichter 13 verbunden. Damit dient der netzgeführte Stromrichter 13 dem selbstgeführten Stromrichter 14 als Energiequelle.

Die Wechselspannungsseite ist in diesem Ausführungsbeispiel dreiphasig ausgestaltet. Alternativ ist auch eine einphasige Ausgestaltung möglich.

Die FIG 2 zeigt ein weiteres Ausführungsbeispiel der Energieversorgungsvorrichtung 1. Zur Vermeidung von Wiederholungen wird auf die Beschreibung zur FIG 1 sowie auf die dort eingeführten Bezugszeichen verwiesen. Die Anzapfungen 5 der zweiten Wicklung 111 sind in dieser Figur nicht dargestellt, können aber genauso wie im Ausführungsbeispiel der FIG 1 auch im vorliegenden Ausführungsbeispiel an der ersten Wicklung 111 und/oder zweiten Wicklung 112 des ersten Transformators 11 angeordnet sein. Bei diesem Ausführungsbeispiel ist die erste Wicklung 121 des zweiten Transformators 12 mit der zweiten Wicklung 112 des ersten Transformators 11 verbunden.

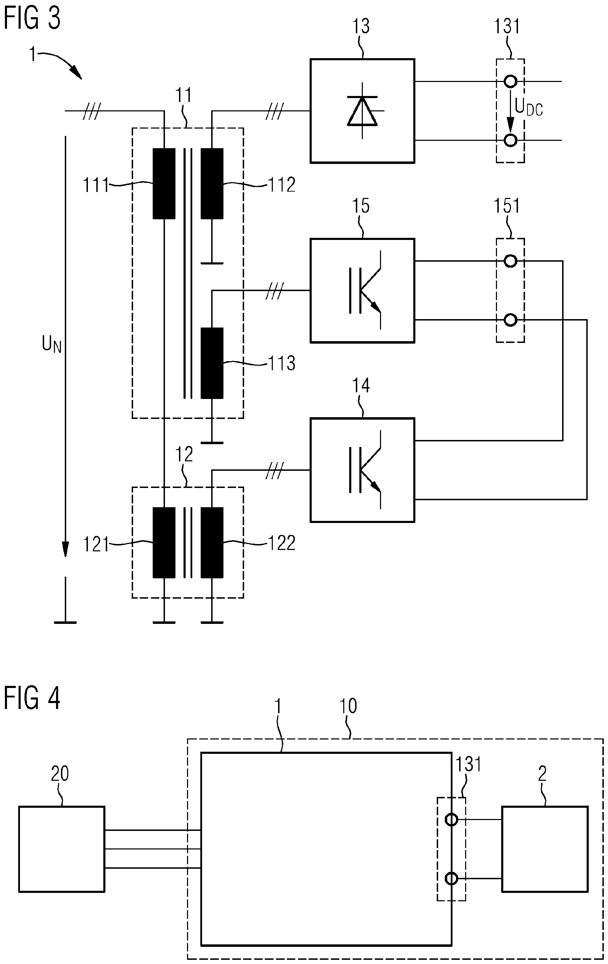

Die FIG 3 zeigt ein weiteres Ausführungsbeispiel der Energieversorgungsvorrichtung 1. Zur Vermeidung von Wiederholungen wird auf die Beschreibung zu den Figuren 1 und 2 sowie auf die dort eingeführten Bezugszeichen verwiesen. Wie im Ausführungsbeispiel der FIG 1 ist die erste Wicklung 121 des zweiten Transformators 12 mit der ersten Wicklung 111 des ersten Transformators 11 verbunden. Als Energiequelle für die gleichspannungsseitige Versorgung des selbstgeführten Stromrichters 14 mit elektrischer Energie dient ein weiterer Stromrichter 15. Der selbstgeführte Stromrichter 14 ist dazu gleichspannungsseitig mit einem gleichspannungsseitigen Anschluss 151 des weiteren Stromrichters 15 verbunden. Der weitere Stromrichter kann sowohl als netzgeführter oder, wie dargestellt, als selbstgeführter Stromrichter, beispielsweise mit IGBT-Halbleitern, ausgebildet sein.

Die FIG 4 zeigt eine Elektrolysevorrichtung 10, bei der ein Elektrolyseur 2 mit dem gleichspannungsseitigen Anschluss 131 der Energieversorgungsvorrichtung 1 verbunden ist. Es ist darüber hinaus möglich, eine Vielzahl von Elektrolyseuren 2, insbesondere mindestens zwei Elektrolyseure 2 mit einer Energieversorgungsvorrichtung 1 zu einer Elektrolysevorrichtung 10 zu verbinden. Elektrische Energie bezieht die Energieversorgungsvorrichtung 1 der Elektrolysevorrichtung 10 von einem Energieversorgungsnetz 20, mit dem die Energieversorgungsvorrichtung 1 elektrisch verbunden ist. Diese elektrische Verbindung kann vorteilhafterweise, wie dargestellt, dreiphasig ausgebildet sein.

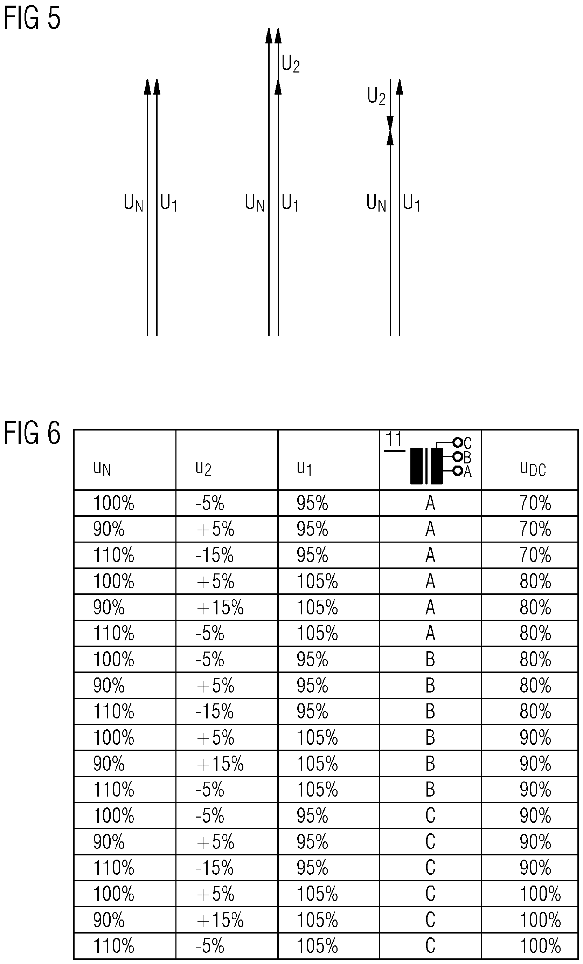

Die FIG 5 zeigt ein Zeigerbild der unterschiedlichen Spannungen am Beispiel des Ausführungsbeispiels der FIG 1. Entspricht die Netzspannung U_{N} der Eingangsspannung U₁, die für die Erzeugung der gewünschten Gleichspannung U_{DC} benötigt wird, so braucht der selbstgeführte Stromrichter 14 keine Spannung U₂ zu erzeugen. Ist jedoch die Netzspannung U_{N} höher als die benötigte Spannung U₁, so wird durch den selbstgeführten Stromrichter 14 eine Spannung U₂ erzeugt, die phasengleich, erkennbar an der gleichen Pfeilrichtung, mit der Spannung U₁ an der ersten Wicklung 111 des ersten Transformators 11 ist. Ist die Netzspannung U_{N} kleiner als die gewünschte Spannung U₁, so wird durch den selbstgeführten Stromrichter 14 an der ersten Wicklung 121 des zweiten Transformators 12 eine Spannung erzeugt, die gegenphasig, d.h. um 180° phasenverschoben zur Spannung U₁ an der ersten Wicklung 111 des ersten Transformators 11 ist. Somit kann der netzgeführte Stromrichter 13 immer im optimalen Arbeitspunkt betrieben werden.

Die FIG 6 stellt die Auswirkung der Abzapfungen 5 des ersten Transformators 11 dar. Die die Funktionsweise der Anzapfungen 5 unabhängig von einer konkreten Spannung ist, sind in der Tabelle relative Spannungen (mit Kleinbuchstaben gekennzeichnet) genannt, wobei sich die relative Netzspannung u_{N}, die relativen Transformatorspannungen u₁ und u₂ auf die Nennspannungen vom Netz beziehen. Die relative Ausgangsspannung u_{DC} bezieht sich auf die maximal erzeugbare Gleichspannung U_{DC}, die zum Ende der Lebensdauer des Elektrolyseurs benötigt wird.

Die Bezeichnungen der relativen Spannungen u₁, u₂, u_{N} und u_{DC} beziehen sich auf die in FIG 1 dargestellten Spannungen U₁, U₂, U_{N} und U_{DC.} Bei der Auslegung, die der Tabelle zugrunde liegt, wird davon ausgegangen, dass die Netzspannung U_{N} um maximal 10% um ihren Nennwert schwankt und der selbstgeführte Stromrichter 14 in der Lage ist, +/-15% der Nennspannung des Netzes bereitzustellen. Bei u₁=105% liefert der netzgeführte Stromrichter 13, beispielweise ausgeführt als Thyristorgleichrichter, der nach Abschluss der Vorladung mit einem Steuerwinkel α von 0° betrieben werden kann, über den Abgriff C eine relative Gleichspannung u_{DC} von 100%, über den Abgriff B eine relative Gleichspannung u_{DC} von 90% und über den Abgriff A eine relative Gleichspannung u_{DC} von 80%. Mit diesen drei Abgriffen A, B, C, die nur selten aufgrund der voranschreitenden Alterung des Elektrolyseurs umgeklemmt werden müssen und damit manuell umklemmbar ausgeführt sein können, lässt sich eine alterungsbedingte, relative Gleichspannung u_{DC} im Bereich von 70% bis 100% erzielen.

Damit zeigt die Tabelle der FIG 6 eine Steuerungsstrategie, wie mit den drei Anzapfungen 5, auch Wicklungsanzapfungen genannt, und einem Stellbereich des selbstgeführten Stromrichters 14 von +/-15% der Nennspannung des Netzes die ausgangsseitige Gleichspannung U_{DC} gesteuert werden kann. Durch die Kombination der Anzapfungen und des selbstgeführten Stromrichters 14 kann der volle erforderliche Stellbereich der Spannung erreicht werden.

Mit Hilfe der Spannung U₁ am ersten Kondensator 11 kann die erforderliche Gleichspannung U_{DC}, die sich insbesondere aus dem Alterungszustand des Elektrolyseurs ergibt, in allen Arbeitspunkten im Bereich der genannten Netzspannungstoleranzen in einer Bandbreite von 10%-Punkten eingestellt werden. Bei einer weiteren Abweichung wird dann entsprechend die Anzapfung gewechselt. Somit können beispielsweise, wie dargestellt, bei drei Anzapfungen 5 insgesamt ein Gleichspannungsbereich von 30%-Punkten über die Lebensdauer abgedeckt werden.

Die Netzspannungsschwankungen im Bereich von +/-10% werden vom selbstgeführten Stromrichter 14 dabei derart ausgeglichen, dass die zur Erreichung der ausgangsseitigen Gleichspannung U_{DC} gewünschte Spannung U₁ am ersten Transformator 11 anliegt.

Eine entsprechende Steuerung ist auf die Anordnungen der FIG 2 und FIG 3 übertragbar.

Damit kann durch den vorgeschlagenen Aufbau der Energieversorgungsvorrichtung 1 bei der Dimensionierung des selbstgeführten Stromrichters 14 mit einem Spannungsstellbereich von +/-15% der Nennspannung des Netzes eine kostengünstige Energieversorgung für einen oder mehrere Elektrolyseure angegeben werden, die verlustarm, netzfreundlich ist und die Anforderungen in Bezug auf die Alterung des Elektrolyseurs erfüllt.

## Patentansprüche

1. Energieversorgungsvorrichtung (1) für einen Elektrolyseur (2), aufweisend
- einen ersten Transformator (11) und einen zweiten Transformator (12),
- einem netzgeführten Stromrichter (13) und
- einem selbstgeführten Stromrichter (14),
wobei eine erste Wicklung (111) des ersten Transformators (11) zur Verbindung mit einem Energieversorgungsnetz (20) vorgesehen ist, wobei der netzgeführten Stromrichter (13) wechselspannungsseitig mit einer zweiten Wicklung (112) des ersten Transformators (11) verbunden ist, wobei der gleichspannungsseitige Anschluss (131) des netzgeführten Stromrichters (13) als Anschluss für den Elektrolyseur (2) ausgebildet ist, wobei der selbstgeführte Stromrichter (14) wechselspannungsseitig mit einer zweiten Wicklung (122) des zweiten Transformators (12) verbunden ist, wobei der selbstgeführte Stromrichter (14) gleichspannungsseitig mit einer Energiequelle verbunden ist, wobei eine erste Wicklung (121) des zweiten Transformators (12) mit einer der Wicklungen (111, 112) des ersten Transformators (11) elektrisch in Reihe angeordnet ist.

2. Energieversorgungsvorrichtung (1) nach Anspruch 1, wobei die erste Wicklung (121) des zweiten Transformators (12) elektrisch in Reihe zu der ersten Wicklung (111) des ersten Transformators (11) angeordnet ist.

3. Energieversorgungsvorrichtung (1) nach einem der Ansprüche 1 oder 2, wobei die erste Wicklung (121) des zweiten Transformators (12) elektrisch in Reihe zu der zweiten Wicklung (112) des ersten Transformators (11) angeordnet ist.

4. Energieversorgungsvorrichtung (1) nach einem der Ansprüche 1 bis 3, wobei der selbstgeführte Stromrichter (14) gleichspannungsseitig mit dem gleichspannungsseitigen Anschluss (131) des netzgeführten Stromrichters (13) verbunden ist.

5. Energieversorgungsvorrichtung (1) nach einem der Ansprüche 1 bis 4, wobei der selbstgeführte Stromrichter (14) gleichspannungsseitig mit einem gleichspannungsseitigen Anschluss (151) eines weiteren Stromrichters (15) verbunden ist, wobei der weitere Stromrichter (15) wechselspannungsseitig mit einer dritten Wicklung (113) des ersten Transformators (11) verbunden ist.

6. Energieversorgungsvorrichtung (1) nach einem der Ansprüche 1 bis 4, wobei die zweite Wicklung (112) des ersten Transformators (11) mindestens zwei Anzapfungen (5) aufweist.

7. Elektrolysevorrichtung (10) mit einer Energieversorgungsvorrichtung (1) nach einem der Ansprüche 1 bis 6 und mindestens einem Elektrolyseur (2), wobei der Elektrolyseur (2) mit dem gleichspannungsseitigen Anschluss (131) des netzgeführten Stromrichters (13) elektrisch verbunden ist.

8. Verfahren zum Betreiben einer Energieversorgungsvorrichtung (1) nach einem der Ansprüche 1 bis 6 oder einer Elektrolysevorrichtung (10) nach Anspruch 7, wobei die Spannung am gleichspannungsseitigen Anschluss (131) des netzgeführten Stromrichters (13) mittels der wechselspannungsseitigen Spannung des selbstgeführten Stromrichters (14) gesteuert oder geregelt wird.

9. Verfahren nach Anspruch 8, wobei die wechselspannungsseitige Spannung des selbstgeführten Stromrichters (14) derart gesteuert oder geregelt wird, dass die Spannungen der elektrisch in Reihe angeordneten Wicklungen (111,121 bzw. 112,121) phasengleich oder um 180° phasenverschoben sind.

10. Verfahren nach einem der Ansprüche 8 oder 9, wobei der netzgeführte Stromrichter (13) als Thyristorgleichrichter ausgebildet ist und mit einem Steuerwinkel (α) von null betrieben wird.
